# EUROPÄISCHE PATENTSCHRIFT

(11) **EP 0 994 320 B1**
(45) Veröffentlichungstag und Bekanntmachung des Hinweises auf die Patenterteilung: **17.11.2004**
(21) Anmeldenummer: 99810934.2
(22) Anmeldetag: 14.10.1999
(51) Int. Cl.: F28F 1/04, F28D 1/03

(54) **Heizkörper, mit mindestens zwei aufeinanderstehenden Flachrohren**
Radiator with at least two stacked flat tubes
Radiateur avec au-moins deux tubes plats superposés

(30) Priorität: 17.10.1998 DE 29818579 U; 25.08.1999 CH 155399
(43) Veröffentlichungstag der Anmeldung: 19.04.2000
(73) Patentinhaber: Arbonia AG, 9320 Arbon/Frasnacht (CH)
(72) Erfinder: CENCI, Danilo, CH-9320 Arbon (CH); HÜRDLER, Mario, DE-01589 Riesa (DE)
(74) Vertreter: Köckeritz, Günter

(56) Entgegenhaltungen:
- EP-A- 0 798 526
- CH-A- 524 799
- DE-A- 19 510 283
- DE-U- 29 818 579
- GB-A- 1 203 303
- PATENT ABSTRACTS OF JAPAN vol. 012, no. 212 (M-710), 17. Juni 1988 (1988-06-17) -& JP 63 014091 A (MATSUSHITA ELECTRIC IND CO LTD), 21. Januar 1988 (1988-01-21)

## Beschreibung

Die Erfindung bezieht sich auf einen Heizkörper, mit mindestens zwei als je eine Wandung dienenden Flachrohren oder dergleichen, welche längsseitig durch eine Stoßfuge aneinandergefügt sind gemäß den Merkmalen des Oberbegriffsdes Anspruchs 1.

Ein derartiger Heizkörper ist, zum Beispiel, aus des EP-A-0 798 526 bekannt.

Ein Heizkörper gemäß der Druckschrift DE-A-295 06 830 ist als sogenannter Konvektor ausgebildet. Dieser Konvektor hat frontseitig mindestens zwei übereinander angeordnete Flachrohre und an deren Hinterseite eine an sich bekannte Lamellenreihe. Zwischen diesen beiden Flachrohren ist eine Stoßfuge gebildet. Bei der nach der Herstellung dieses Heizkörpers erfolgenden Außenlackierung können im Spaltbereich dieser Stoßfuge im Verlaufe der Zeit Korrosionsschäden auftreten, da die Lackierung auf der Frontseite bei dieser Stoßfuge durch minime Risse oder Spalten unterbrochen sein kann.

Gemäß der Druckschrift DE-A1-34 03 488 ist man zur Verhinderung solcher undefinierter Übergangsstellen auch dazu übergegangen, zwischen diesen Flachrohren einen definierten Spalt vorzusehen, so dass die Oberflächen auch der gegeneinander zugekehrten Flächen dieser Flachrohre mit einer Lackierungsschicht versehen werden können. Diese Lösung ist jedoch aus optischen Gründen nicht ideal und außerdem wird in dem üblicherweise horizontal erzeugten Spalt eine Staubablagerung gefördert, der für eine Reinigung jedoch schlecht zugänglich ist.

Außerdem sind bei der Heizwand gemäß dieser Druckschrift DE-A1 34 03 488 zwischen den Flachrohren den Spalt bildende Abstandhalter vorhanden, welche durch Pressschweißen zusammengefügt sind und einen Durchgang für das Heizmedium vom einen zum anderen Flachrohr bilden.

In der EP-A-07 98 526 wird als nächstkommender Stand der Technik ein Radiator beschrieben, der aus einem Heizkörperblock mit senkrechten zu einem Sammelrohr ausgerichteten und an diesem festgelegten Heizrohren besteht, die in ihrer Querschnittsfläche in Längs- und Querrichtung unterschiedliche Durchmesser aufweisen. Die halbelipsenförmigen Heizrohrhälften sind an ihren einander zugewandten Seiten durch Verschweißen dicht aneinander festgelegt.

Der vorliegenden Erfindung wurde demgegenüber die Aufgabe zugrundegelegt, einen Heizkörper nach der eingangs erwähnten Gattung zu schaffen, mittels dem bei einfacher und kostengünstiger Herstellung eine eindeutig definierte und hierdurch dauerhafte Übergangsstelle zwischen den Rohren erzielt wird, bei der keine sichtbaren Korrosionsschäden entstehen, oder aber dass bei dem Heizkörper die dazugehörigen Heizrohrwände kostengünstig herstellbar sind.

Die Aufgabe ist erfindungsgemäß durch die Merkmale der Patentanspruchs gelöst.

Mit diesem neuartigen Heizkörper wird in einfacher Weise ein Rosten in dieser Stossfuge oder ein Ansetzen von Staub verhindert, und die Schweißnaht kann ohne grossen Aufwand sehr gleichmässig und mit einem sehr geringen Querschnitt über die gesamte Länge der zu verbindenden Flachrohre erzeugt werden; dies mit dem weiteren Vorteil, dass keine Nacharbeitung erforderlich ist. Ausserdem ist die Hitzeeinwirkung beim Laserschweissen so gering, dass praktisch kein Verzug bei den Flachrohren entsteht. Durch dieses durchgehende Schweissen in diesem Spaltbereich erübrigt sich das bis anhin gebräuchliche stellenweise Punktschweissen zum Verbinden der aufeinanderstehenden Flachrohre.

Ausführungsbeispiele der Erfindung sowie weitere Vorteile derselben sind nachfolgend anhand der Zeichnung näher erläutert. Es zeigt:
- Fig.1: einen perspektivisch dargestellten Heizkörper in teilweiser Ansicht,
- Fig.2: einen teilweisen Querschnitt des Heizkörpers nach Fig.1, bei dem die Flachrohre bei der Stossfuge vergrössert dargestellt sind, und bei dem die Schweißnaht micht gemäß des Erfindung ausgebildet ist,
- Fig.3: einen vergrösserten Ausschnitt A nach Fig.2.
- Fig.4: einen teilweisen Querschnitt einer Heizwand mit zwei aneinanderliegenden Flachrohren.
- Fig.5: einen Querschnitt einer Heizkörperwandung, bei der vier Flachrohre gebildet sind,
- Fig.6: einen Querschnitt einer Variante einer Heizkörperwandung, und
- Fig.7: einen Querschnitt einer weiteren Variante einer Heizkörperwandung,
- Fig.8: einen vergrösserten Ausschnitt B nach Fig.7, und
- Fig.9: eine teilweise perspektivische Darstellung zweier Flachrohre im endseitigen Bereich.

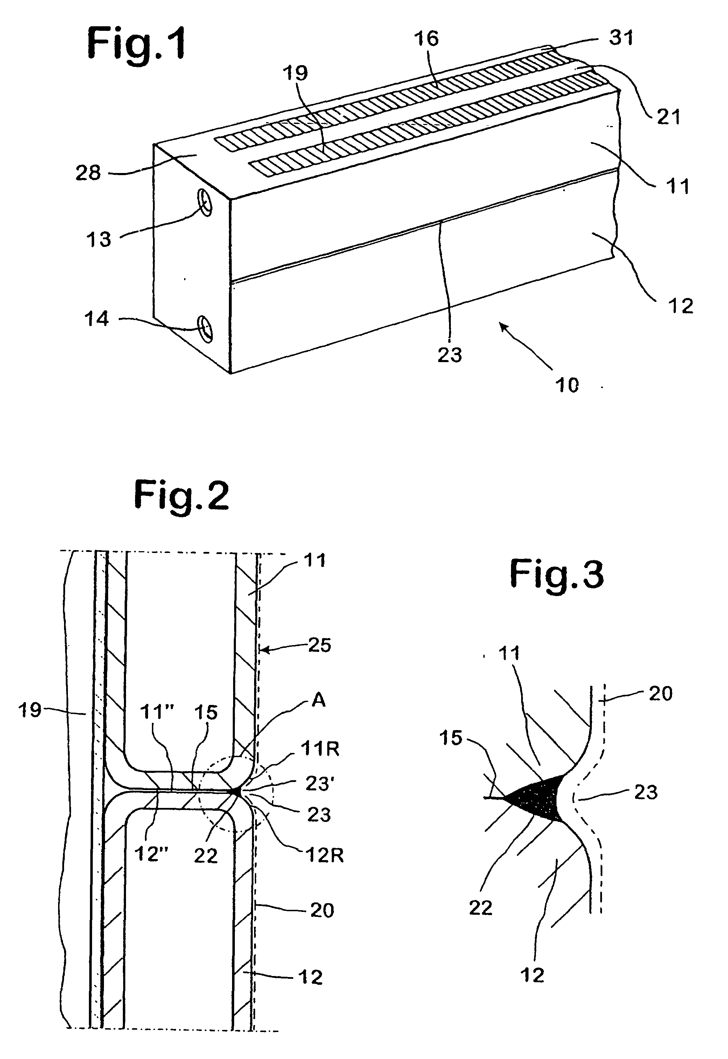

Fig.1 zeigt einen Heizkörper 10, von dem annähernd die eine Hälfte veranschaulicht ist und der vorliegend als sogenannter Konvektor-Heizkörper ausgestaltet ist, der im wesentlichen aus drei hintereinander stehenden Heizwänden und aus zwischen diesen angeordneten Konvektorlamellen 16, 19 besteht. Diese Konvektorlamellen 16, 19 sind reihenweise im Abstand zueinander mit diesen Heizwänden verbunden. Durch die zwischen diesen Lamellen gebildeten Hohlräume zirkuliert die Luft und es kann durch die vergrösserte Oberfläche eine erheblich gesteigerte Wärmeleistung herbeigeführt werden.

Die bei den Enden über ein wasserführendes Kopfstück 28 miteinander verbundenen Heizwände des Heizkörpers weisen jeweils zwei aufeinanderstehende, gleich dimensionierte Flachrohre 11, 12, 21, 31 auf, welche einen länglichen rechteckigen Querschnitt aufweisen und ihre Längs-Schmalseiten 11", 12" überdeckend aufeinanderliegen und hierbei eine Stossfuge 15 bilden. Diese Flachrohre sind mit Vorteil aus Stahl, sie könnten jedoch auch aus einem anderen Material gefertigt sein.

Bei den seitlichen Kopfstücken 28 ist im oberen und im unteren Teil je ein Anschluss 13, 14 vorhanden. In den einen an eine Heizleitung befestigbaren Anschluss wird ein flüssiges Heizmedium, insbesondere Warmwasser, eingeführt, welches durch die oberen Flachrohre 11, 21, 31 strömt und beim gegenüberliegenden, nicht gezeigten Kopfstück in die unteren Flachrohre 12 zum Anschluss 14 und über ein nicht näher gezeigtes Leitungsrohr zurück zu einer Zentralheizung oder dergleichen geleitet wird. Selbstverständlich könnten auch andere Anschlussarten, wie zum Beispiel eine wechselseitige, ein Einrohr-Anschluss oder dergleichen angewendet werden.

Entsprechend Fig.2 und Fig.3 ist an der Frontseite 25 dieser Flachrohre 11, 12 eine sich entlang dieser Stossfuge 15 erstrekkende Schweissnaht 22 erzeugt, durch welche an dieser Frontseite ein nahtloser Übergang vom einen zum ändern Flachrohr gebildet ist.

Die mit einem rechteckigen Querschnitt versehenen Flachrohre 11, 12 weisen beim Übergang von der Stossfuge 15 zur Frontseite 25 radiusoder andersförmige Aussenkanten 11 R, 12R auf, hieraus sich eine Längsnut 23 ergibt, in welcher diese Schweissnaht 22 erzeugt ist. Durch diese nahtlose Ausbildung im Übergangsbereich zwischen den Flachrohren 11, 12 entstehen im Wurzelbereich 23' der Längsnut 23 keinerlei Spalten, wodurch ein Eindringen von Feuchte in die Stossfuge 15 und einem daraus resultierenden Rosten der Flachrohre dauerhaft verhindert werden kann. Nach dieser Herstellung der Schweissnaht und dem Zusammenbau des Heizkörpers 10 wird eine strichpunktiert dargestellte Lackierung 20 in an sich herkömmlicher Weise in gleichmässiger Dicke auf die Aussenoberfläche der Flachrohre angebracht.

Diese entlang der Stossfuge 15 über die gesamte Heizkörperlänge vorgesehene Schweissnaht 22 ist im Rahmen der Erfindung durch Laserschweissen erzeugt. Dieses Laserschweisssen bietet den Vorteil, dass sich die Verbindungsnaht automatisiert und mit einem sehr konstant dünnen Querschnitt von vorzugsweise annähernd einem Millimetern Breite herstellen lässt.

Auf der Rückseite der Flachrohre 11, 12 ist in Fig.2 fernerhin noch eine teilweise Konvertorlamelle 19 ersichtlich, die an die Flachrohre angeschweisst ist. Im Prinzip könnte auch auf der Rückseite der Flachrohre bei dieser Stossfuge eine analoge Schweissnaht wie auf der Vorderseite vorgesehen sein.

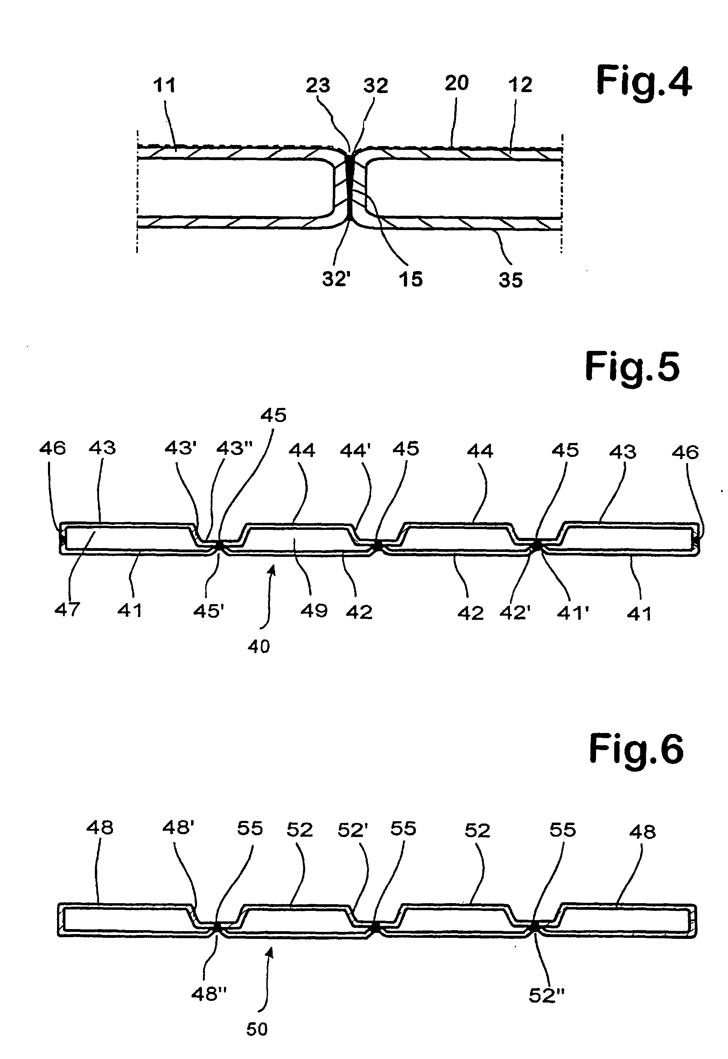

Gemäss Fig.4 ist bei den Flachrohren 11, 12 wiederum eine bei ihren gegenseitigen Berührungsflächen gebildete Stossfuge 15 vorhanden. Entlang dieser Stossfuge 15 ist eine Schweissnaht 32 erzeugt, welche nicht nur ein bis zwei Millimeter, sondern durchgehend in der annähernd gesamten Tiefe der Flachrohre 11, 12 ausgebildet ist. Damit ergibt sich auch bei der hinteren Wandung 35 eine durchgehende Abdichtung bei der Stossfuge 15 aufgrund der erzeugten Schweissnaht 32'. Zudem sind die beiden Heizwände 11, 12 fest miteinander verbunden und es werden keine zusätzlichen Befestigungsmittel, wie zum Beispiel Querstangen, mehr benötigt. Je nach Dosierung des Laserstrahls könnte die Schweissnaht in der Stossfuge 15 beliebig tief gewählt werden.

Fig.5 zeigt eine aus Walzprofilen 41, 42, 43, 44 zusammengesetzte Heizkörperwandung 40, die beispielsweise als eine Wand eines nach Fig.1 dargestellten Konvektors ausgeführt sein kann. Vorliegend sind zwei längliche Walzprofile 43, 44 und 41, 42 derart angeordnet, dass sie unmittelbar aneinander angrenzen und gemeinsam Stossfugen 45' bilden.

Erfindungsgemäss sind entlang dieser Stossfugen 45' sich über die gesamte Länge der Profile 43, 44 und 41, 42 erstreckende Schweissnähte 45 erzeugt, durch welche diese Profile durchgehend miteinander verbunden sind. Das auf der einen Seite befindliche Walzprofil 41, 42 ist entlang den Stossfugen 45' mit Anschrägungen 41', 42', derweil das auf der anderen Seite angeordnete Walzprofil 43, 44 bei den Stossfugen 45' mit Z-förmigen Krümmungen 43', 44' versehen ist. Diese Krümmungen 43', 44' sind bei der jeweiligen Stossfuge 45' vorteilhaft parallel zu der übrigen Profilwand ausgerichtet und dienen als Anschlagfläche. Die Walzprofile sind aussenseitig um 90° abgewinkelt und es ist dort ebenfalls eine durchgehende Schweissnaht 46 vorgesehen.

Mit dieser Schweissnaht wird nicht nur ein nahtloser Übergang, sondern auch noch eine dichte Verbindung zwischen diesen Walzprofilen und mit ihr jeweils ein Durchlass 47, 49 erzeugt, mittels dem das Heizmedium schlangenförmig oder in gleicher Richtung durch diese vier Durchlässe 47, 49 geleitet wird.

Mit dieser Ausbildung einer Heizkörperwandung aus mehreren solchen Walzprofilen lässt sich ein automatisierter Produktionssvorgang und somit eine kostengünstige Herstellung derselben erzielen.

Die Heizkörperwandung 50 gemäss Fig.6 unterscheidet sich von derjenigen nach Fig.5 darin, dass sie nicht aus einzelnen Walzprofilen, sondern aus einem einzigen Rundrohr hergestellt ist, welches in mehreren Arbeitsgängen gewalzt und zu diesen vier Flachrohren 48, 52 verformt ist. Die äusseren Flachrohre 48 weisen demnach aussen keine Schweissnähte auf. Die geformten Flachrohre 48, 52 sind im Rahmen der Erfindung an den gebildeten Stossfugen über die gesamte Länge mit Schweissnähten 55 versehen. Hierbei haben diese Schweissnähte 55 die Funktion, das verformte Rundprofil bei den Stossfugen zu verbinden und die inneren Öffnungen der einzelnen Flachrohre abdichtend voneinander zu trennen. Bei den Stossfugen sind die gebildeten Flachrohre wie diejenigen nach Fig.5 hinterseitig mit U-förmigen Krümmungen 48', 52' und frontseitig mit halbrunden Nuten 48", 52" ausgebildet.

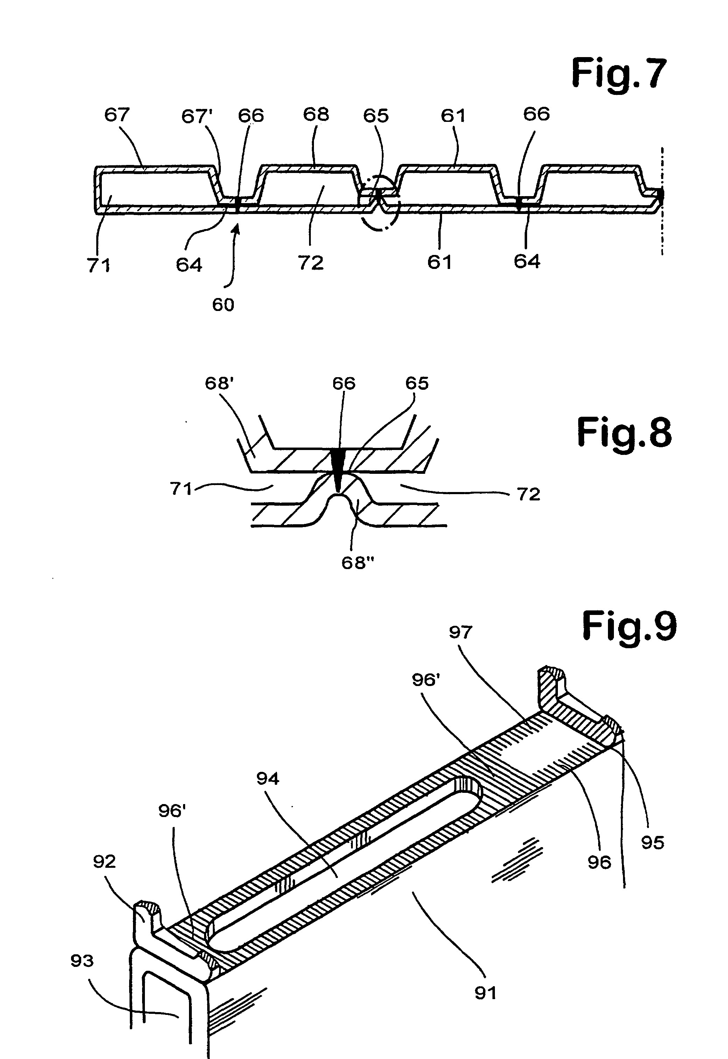

Fig.7 zeigt eine weitere Variante einer Heizkörperwandung 60, die an sich gleich wie diejenige nach Fig.6 hergestellt ist. Der einzige Unterschied zeigt sich darin, dass die bei Fig.6 vorgesehenen vier Flachrohre 48, 52 in je zwei Flachrohre 61, 62 bzw. 67, 68 unterteilt sind, somit statt vier deren acht mit eigenen Durchläufen erzeugt sind. Bei den zusätzlich geschaffenen Stossfugen 64 sind die Flachrohre vorderseitig zu einem ebenen Verlauf und rückseitig zu entsprechend U-förmigen Krümmungen 67' derart verformt, dass Berührungsstellen entstehen, bei denen die durchgehenden Schweissnähte 66 gefertigt sind. Mit dieser Heizwandung 60 ist insbesondere der Vorteil herbeigeführt, dass die Wandungen durch die kleineren Öffnungen geringeren Druck- und Verformungsbelastungen ausgesetzt sind und sie demgemäss mit geringeren Wandstärken, bspw. nur mit 1.25 mm statt mit 1.5 oder 1.8 mm ausgeführt sein können.

Gemäss Fig.8 bewirkt die strichliniert veranschaulichte Schweissnaht 66 bei den an sich bei der Stossfuge 65 ununterbrochenen Wandungen 68', 68" eine Verbindung zwischen diesen und eine Abdichtung zwischen den benachbarten Durchgängen 71, 72.

Fig.9 verdeutlicht eine weitere vorteilhafte Ausbildung einer Heizwandung mit übereinander angeordneten Flachrohren 91, 92, die teilweise dargestellt sind, wobei deren stirnseitige Abdeckungen nicht gezeigt sind. Ihre Durchgänge 93 sind vorzugsweise endseitig mit schlitzförmigen Verbindungsöffnungen 94 versehen, durch welche das Heizmedium vom einen zum nächsten Flachrohr geleitet wird. Diese Verbindungsöffnungen 94, von denen nur die vom einen Flachrohr 91 gezeigt ist, befinden sich zweckmässigerweise bei den Stossfugen 95, bei denen sich die länglichen Schmalseiten der Flachrohre gegenseitig berühren.

Bei der Stossfuge 95 sind im Rahmen der Erfindung zwei sich über die gesamte Länge der Flachrohre 91, 92 erstreckende Schweissnähte 96, 97 analog derjenigen nach Fig.2 vorgesehen, wobei die eine frontseitig und die andere rückseitig angeordnet ist. Ein weiterer Vorteil ergibt sich hierbei, dass die bei den Verbindungsöffnungen 94 erforderliche Abdichtung beim Übergang vom einen zum anderen Flachrohr sehr einfach hergestellt werden kann, nämlich indem bei dieser Verbindungsöffnung 94 die ohnehin zu erzeugenden Schweissnähte 96, 97 um die gesamte Öffnung 94 herum geführt werden. Bei den beiden Enden der Öffnung 94 wird die Schweissnaht 96' durchgehend erzeugt, was mit einem Laserschweisser durch eine erhöhte Stromdosierung sehr einfach realisiert werden kann.

Die Erfindung ist mit den oben erläuterten Ausführungsbeispielen ausreichend dargetan. Sie liesse sich jedoch noch in anderen Varianten darstellen. Anstelle einer Konvektorheizung könnte die nach der Erfindung ausgebildete Schweissnaht auch bei einem anders als demjenigen nach Fig.1 ausgebildeten Heizkörper, insbesondere bei sogenannten Heizwänden, angewendet werden, bei welchem mehrere übereinanderstehende Flachrohre mit zwischen diesen vorgesehenen Längsnuten und die Flachrohre als Profilrohre mit jeweils einem rechteckigen, ovalen oder ähnlichen Querschnitt ausgebildet sein könnten.

## Patentansprüche

1. Heizkörper mit mindestens zwei als je eine Wandung dienenden Flachrohren (11, 12) oder dergleichen, welche längsseitig durch eine Stoßfuge (15, 45', 64, 65, 95) aneinandergefügt sind, wobei entlang dieser Stoßfuge eine sich annähernd über die gesamte Länge der Flachrohre erstreckende Schweißnaht (32) erzeugt ist, durch welche ein nahtloser Übergang zwischen den Rohren gebildet ist,
**dadurch gekennzeichnet, dass**
die Schweißnaht (32) durchgehend in der gesamten Tiefe der gegenseitigen Berührungsflächen der Flachrohre (11, 12) ausgebildet ist, und die Schweißnaht (22) frontseitig über die gesamte Länge der Flachrohre (11, 12) erzeugt ist, durch welche ein nahtloser Übergang zwischen den Flachrohren gebildet ist und damit eine ununterbrochene Lackierung (20) ermöglicht wird, wobei die Schweißnaht (22, 45) entlang dieser Stoßfuge (15, 45', 64, 65, 95) durch Laserschweißen erzeugt ist.

2. Heizkörper nach Anspruch 1, **dadurch gekennzeichnet, dass** die mit einem annähernd rechteckigen Querschnitt versehenen Flachrohre (11, 12) beim Übergang von der Stoßfuge (15) zur Frontseite (25) radius- oder andersförmige Außenkanten (11R, 12R) aufweisen und damit eine Längsnut (23) gebildet ist, in welcher diese Schweißnaht (22) erzeugt ist, wobei sie im Wurzelbereich (23') mäßigen Übergang vom einen zum anderen Radius der Außenkanten (11 R, 12R) der Flachrohre bewirkt.

3. Heizkörper nach einem der vorhergehenden Ansprüche, **dadurch gekennzeichnet, dass** bei übereinander angeordneten Flachrohren (91, 92) ihre Durchgänge (93) mit schlitzförmigen Verbindungsöffnungen (94) versehen sind, durch welche das Heizmedium vom einen zum nächsten Flachrohr (91, 92) geleitet wird, wobei die bei den Verbindungsöffnungen (94) erforderliche Abdichtung beim Übergang vom einen zum anderen Flachrohr hergestellt ist, indem bei dieser Verbindungsöffnung (94) die bei der Stoßfuge (95) vorgesehenen Schweißnähte (96, 97) um die gesamte Verbindungsöffnungen (94) herum geführt sind.

4. Heizkörper nach einem der vorhergehenden Ansprüche, **dadurch gekennzeichnet, dass** die Schweißnaht (22) mit einem konstant dünnen Querschnitt von annähernd einem bis mehreren Millimetern Breite hergestellt ist.

5. Heizkörper nach Anspruch 1, **dadurch gekennzeichnet, dass** durch die Schweißnaht (45) eine Verbindung der Profile (41, 42, 43, 44) und ein nahtloser Übergang zwischen den aus diesen Profilen erzeugten Rohren gebildet ist.

6. Heizkörper nach Anspruch 1, **dadurch gekennzeichnet, dass** mindestens eine Heizwandung (50), die aus einem einzigen Rundrohr hergestellt ist, welches in mehreren Arbeitsgängen gewalzt und zu mindestens zwei Flachrohren (48, 52) verformt ist, wobei Schweißnähte (55) vorgesehen sind, welche das verformte Rundprofil bei den gebildeten Stoßfugen verbinden und die inneren Öffnungen der einzelnen Flachrohre (48, 52) abdichtend voneinander trennen.

7. Heizkörper nach Anspruch 6, **dadurch gekennzeichnet, dass** die Flachrohre (48, 52) jeweils in zwei Flachrohre (61, 62 bzw. 67, 68) unterteilt sind.

## Claims

1. Radiator having at least two flat tubes (11, 12) or similar, each of which serves as a wall, which tubes are joined to one another longitudinally by means of a butt joint (15, 45', 64, 65, 95), wherein a weld (32), which extends approximately over the entire length of the flat tube, is created along this butt joint, said weld creating a seamless transition between the tubes, **characterised in that** the weld (32) is configured continuously to the same depth as the mutual contact faces of the flat tubes (11, 12), and the weld (22) is created at the front side over the entire length of the flat tubes (11, 12), a seamless transition between the flat tubes being formed by said weld, consequently enabling uninterrupted painting (20), wherein the weld (22, 45) is created along this butt joint (15, 45', 64, 65, 95) by means of laser welding.

2. Radiator according to claim 1, **characterised in that** the flat tubes (11, 12), which are provided with an approximately rectangular cross-section, have radius-shaped or other-shaped outside edges (11 R, 12R) at the transition from the butt joint (15) to the front side (25), and consequently a longitudinal groove (23) is formed in which this weld (22) is created, wherein it gives rise in the root region (23') to moderate transition from the one radius of the outside edges (11 R, 12R) of the flat tubes to the other.

3. Radiator according to one of the preceding claims, **characterised in that** where the flat tubes (91, 92) are disposed one above the other, their passages (93) are provided with slot-shaped connecting apertures (94), through which the heating medium is conducted from the one flat tube to the next flat tube (91, 92), wherein the sealing, which is necessary at the connecting apertures (94), is produced at the transition from the one flat tube to the other flat tube by the welds (96, 97), which are provided at the butt joint (95), being guided around the entire connecting apertures (94) at this connecting aperture (94).

4. Radiator according to one of the preceding claims, **characterised in that** the weld (22) is produced with a continuous thin cross-section, the width of which is between approximately one and several millimetres.

5. Radiator according to claim 1, **characterised in that** a connection of the profiles (41, 42, 43, 44) and a seamless transition between the tubes, which are created from these profiles, is formed by means of the weld (45).

6. Radiator according to claim 1, **characterised in that** there is at least one heating wall (50), which is produced from a single round tube, which is rolled in several operations and is deformed to form at least two flat tubes (48, 52), wherein welds (55) are provided, which connect the deformed round profile at the formed butt joints and separate the inner apertures of the individual flat tubes (48, 52) from one another in a sealing manner.

7. Radiator according to claim 6, **characterised in that** the flat tubes (48, 52) are each divided into two flat tubes (61, 62 or respectively 67, 68).

## Revendications

1. Radiateur avec au moins deux tubes plats (11, 12) servant chacun de paroi, ou autres, qui sont reliés sur le côté longitudinal par un joint d'about (15, 45', 64, 65, 95), moyennant quoi une soudure (32) s'étendant approximativement sur toute la longueur des tubes plats est produite le long de ce joint d'about, par laquelle est formée une jonction sans soudure entre les tubes,
**caractérisé en ce que**
la soudure (32) est configurée en traversant toute la profondeur des surfaces de contact réciproques des tubes plats (11, 12), et la soudure (22) est produite face avant sur toute la longueur des tubes plats (11, 12), par laquelle une jonction sans soudure est formée entre les tubes plats, et un revêtement ininterrompu (20) est alors possible, la soudure (22, 45) étant produite le long de ces joints d'about (15, 45', 64, 65, 95) par la soudure laser.

2. Radiateur selon la revendication 1, **caractérisé en ce que** les tubes plats (11, 12) dotés d'une section transversale approximativement rectangulaire présentent lors de la jonction des joints d'about (15) vers la face avant (25) des arêtes externes (11R, 12R) en forme de rayon ou autre, et une rainure longitudinale (23) est ainsi formée, dans laquelle est produite cette soudure (22), moyennant quoi elle provoque une jonction moyenne dans la zone de la racine (23') d'un rayon à l'autre des arêtes externes (11R, 12R) des tubes plats.

3. Radiateur selon l'une des revendications précédentes, **caractérisé en ce que**, lorsque les tubes plats (91, 92) sont superposés, leurs passages (93) sont munis d'orifices de liaison (94) en forme de fente, par lesquels est conduit le milieu chauffant d'un tube plat (91, 92) à l'autre, moyennant quoi l'étanchéité nécessaire aux orifices de liaison (94) est réalisée lors de la jonction entre un tube plat et l'autre, en dirigeant pour cet orifice de liaison (94) les soudures (96, 97) prévues pour le joint d'about (95) autour de l'ensemble des orifices de liaison (94).

4. Radiateur selon l'une des revendications précédentes, **caractérisé en ce que** la soudure (22) est réalisée avec une section transversale constamment mince d'environ un à plusieurs millimètres de largeur.

5. Radiateur selon la revendication 1, **caractérisé en ce qu'**une liaison des profilés (41, 42, 43, 44), et une jonction sans soudure entre les tubes produits à partir de ces profilés, est formée grâce à la soudure (45).

6. Radiateur selon la revendication 1, **caractérisé en ce qu'**il existe au moins une paroi de chauffage (50) qui est composée d'un seul tube circulaire, laminé en plusieurs étapes de travail et façonné en au moins deux tubes plats (48, 52), sachant que des soudures (55) sont prévues, lesquelles relient le profilé circulaire façonné lorsque les joints d'about sont formés, et séparent de manière étanche les orifices internes des différents tubes plats (48, 52).

7. Radiateur selon la revendication 6, **caractérisé en ce que** les tubes plats (48, 52) sont divisés respectivement en deux tubes plats (61, 62 et/ ou 67, 68).
